# EUROPEAN PATENT SPECIFICATION

(11) **EP 3 454 240 B1**
(45) Date of publication and mention of the grant of the patent: **03.11.2021**
(21) Application number: 18188283.8
(22) Date of filing: 09.08.2018
(51) Int. Cl.: G06F 3/0484, G06F 21/84, G06K 9/00, G06F 21/32

(54) **UNLOCKING METHODS AND RELATED PRODUCTS**
ENTRIEGELUNGSVERFAHREN UND ZUGEHÖRIGE PRODUKTE
PROCÉDÉS DE DÉVERROUILLAGE ET PRODUITS ASSOCIÉS

(30) Priority: 12.09.2017 CN 201710816588
(43) Date of publication of application: 13.03.2019
(73) Proprietor: GUANGDONG OPPO MOBILE TELECOMMUNICATIONS CORP., LTD., Wusha, Chang'an Dongguan, Guangdong 523860 (CN)
(72) Inventor: WANG, Jian, Dongguan, Guangdong 523860 (CN)
(74) Representative: Mewburn Ellis LLP

(56) References cited:
- EP-A1- 3 185 160
- WO-A1-2017/059570
- CN-A- 104 917 894
- CN-A- 105 022 945
- CN-A- 106 326 713
- CN-U- 202 009 428
- US-A1- 2015 199 554
- US-A1- 2017 193 214

## Description

### TECHNICAL FIELD

The present disclosure generally relates to a field of mobile terminal technologies, and more particularly, to an unlocking method and related products.

### BACKGROUND

With the development and progress of the society, mobile terminals such as mobile phones and tablet computers have become more and more popular and important in life. As the mobile terminals have more and more functions, the mobile terminals may realize more purposes by installing applications, such as banking applications, instant messaging applications. Therefore, the mobile terminals are gradually becoming an indispensable tool in life.

The more applications installed in the mobile terminal, the more data information representing the privacy of the user. Therefore, to prevent data leakage caused by the mobile terminal being stolen by others, the user may set password protection for the mobile terminal to enhance the security of the mobile terminal, for example, setting a digital password, a pattern password.

However, in the related art, when the user uses the mobile terminal in a crowded area, the password set by the user is easily seen by others, and the privacy of the user is easily leaked, thereby reducing the security of the mobile terminal.

WO 2017/059570 A1 discloses a method for protecting private information on a terminal device by enabling display of a second interface after an unlocking operation when a special unlocking operation is detected.

US 2015/0199557 A1 discloses a fingerprint sensor, an application processor, and an auxiliary processor, in which the fingerprint sensor is armed prior to the application processor entering a low power or sleep mode. The auxiliary processor receives a state output from the fingerprint sensor to cause activation of one or more functions of the auxiliary processor upon fingerprint authentication while leaving the application processor in the low power or sleep mode.

EP 3 185 160 A1 discloses a screen unlocking method in which unlocking occurs when similarity between a sliding path of the user on a display screen and a preset unlocking pattern is greater than or equal to a preset threshold.

CN202009428U discloses a mobile phone capable of being unlocked through face recognition. The mobile phone comprises a face data acquiring module, a face image processing module and a face recognition module.

CN106326713A discloses an unlocking method for a screen of a mobile terminal. In the locked state of the screen of the mobile terminal, an instruction for unlocking the screen of the mobile terminal is acquired; according to the instruction, a camera of the mobile terminal is started; at least one target image captured by the camera is acquired; when the target images are matched with unlocking images stored in an unlocking image library in advance, screen unlocking operation is executed.

CN105022945A discloses a method comprising: detecting input screen unlocking human face biological information, wherein the screen unlocking human face biological information comprises screen unlocking iris information and/or screen unlocking human face feature information; and comparing whether the screen unlocking human face biological information is matched with preset screen unlocking human face biological information, and if so, detecting whether the same action event happens to both a mobile device and a wearable device bound to the mobile device within a preset time period, and if the same action event happens within the preset time period, performing screen unlocking on the mobile device.

### SUMMARY

The invention provides a mobile terminal and a method as defined in the appended claims.

According to one aspect of the invention, there is provided a mobile terminal as set out in claim 1. The mobile terminal comprises a face information collecting device, a memory and a processor. The face information collecting device is configured to collect a face image. The memory is configured to store a face template. The processor is configured to carry out following actions, including: when detecting a trigger event of lighting a screen of the mobile terminal, obtaining an event identifier of the trigger event; when detecting that the event identifier matches a pre-stored event identifier, turning on the face information collecting device and lighting the screen of the mobile terminal in parallel; and when detecting that the face image collected by the face information collecting device matches the pre-stored face template, performing an unlocking operation.

In one or more embodiments, the processor is further configured to carry out following actions, including: displaying a preview interface on a display interface of the mobile terminal when detecting that the mobile terminal meets a preset condition. The preview interface is configured to display the face image collected by the face information collecting device.

In one or more embodiments, the processor is further configured to carry out following actions, including: when detecting that the mobile terminal does not meet the preset condition, displaying a locked screen interface on the display interface of the mobile terminal; obtaining a trigger operation on the locked screen interface; and when detecting the trigger operation, displaying the preview interface on the display interface of the mobile terminal.

In one or more embodiments, obtaining the trigger operation on the locked screen interface includes: displaying a trigger button for opening the preview interface on the locked screen interface of the mobile terminal; and obtaining a touch operation on the trigger button.

In one or more embodiments, obtaining the trigger operation on the locked screen interface includes: obtaining a sliding operation from the locked screen interface to an unlocking interface.

In one or more embodiments, obtaining the event identifier of the trigger event includes: when detecting the trigger event of lighting the screen of the mobile terminal, turning on a power management service (PMS); obtaining, by means of the PMS, the event identifier of the trigger event.

According to another aspect of the invention, there is provided an unlocking method as set out in claim 6. In the method, upon detecting a trigger event of lighting a screen of a mobile terminal, an event identifier of the trigger event is obtained. When detecting that the event identifier matches a pre-stored event identifier, a face information collecting device of the mobile terminal is turned on and the screen of the mobile terminal is lighted in parallel. When detecting that a face image collected by the face information collecting device matches a pre-stored face template, an unlocking operation is performed.

In one or more embodiments, the method further includes: when detecting that the mobile terminal meets a preset condition, displaying a preview interface on a display interface of the mobile terminal. The preview interface is configured to display the face image collected by the face information collecting device.

In one or more embodiments, the method further includes: when detecting that the mobile terminal does not meet the preset condition, displaying a locked screen interface on the display interface of the mobile terminal; obtaining a trigger operation on the locked screen interface; and when detecting the trigger operation, displaying the preview interface on the display interface of the mobile terminal.

In one or more embodiments, obtaining the trigger operation on the locked screen interface includes: displaying a trigger button for opening the preview interface on the locked screen interface of the mobile terminal; and obtaining a touch operation on the trigger button.

In one or more embodiments, obtaining the trigger operation on the locked screen interface includes: obtaining a sliding operation from the locked screen interface to an unlocking interface.

In one or more embodiments, obtaining the event identifier of the trigger event includes: when detecting the trigger event of lighting the screen of the mobile terminal, turning on a power management service (PMS); obtaining, by means of the PMS, the event identifier of the trigger event.

### BRIEF DESCRIPTION OF THE DRAWINGS

To clearly illustrate embodiments of the present disclosure or technical solutions in the prior art, a brief description of drawings used in embodiments or in the prior art descriptions is given below. Obviously, the drawings in the following descriptions are only part embodiments of the present disclosure, and for those skilled in the art, other drawings can be obtained according to these drawings without creative labor.
Fig. 1 is a schematic diagram illustrating a mobile terminal according to an embodiment of the present disclosure.
Fig. 2 is a flow chart illustrating an unlocking method according to an embodiment of the present disclosure.
Fig. 2-1 is a schematic diagram illustrating a preview interface according to an embodiment of the present disclosure.
Fig. 2-2 is a schematic diagram illustrating a locked screen interface according to an embodiment of the present disclosure.

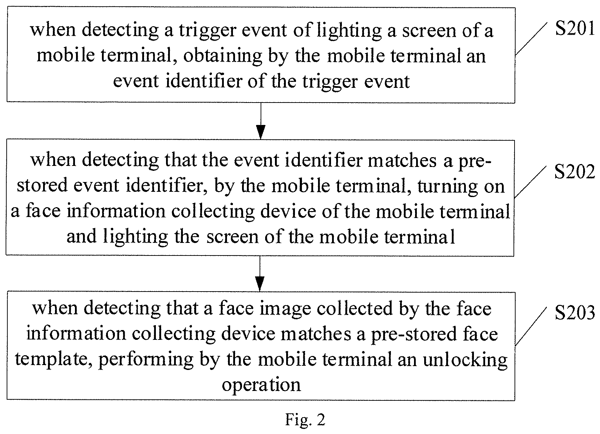

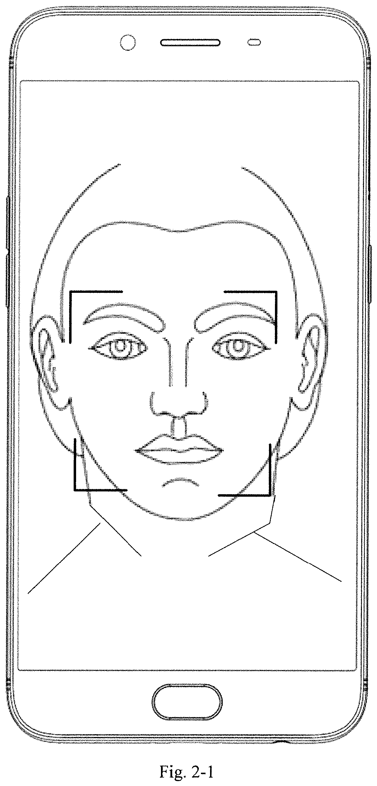

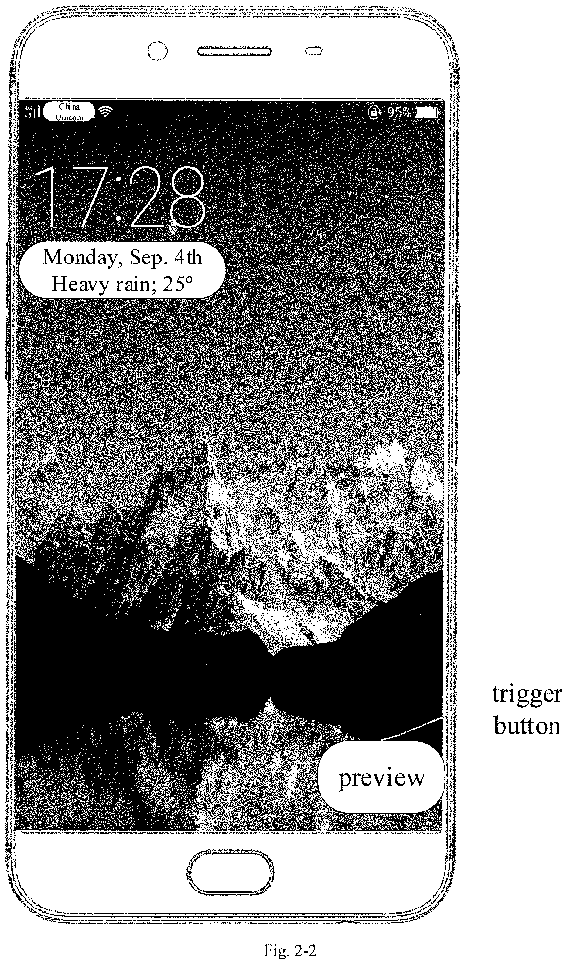

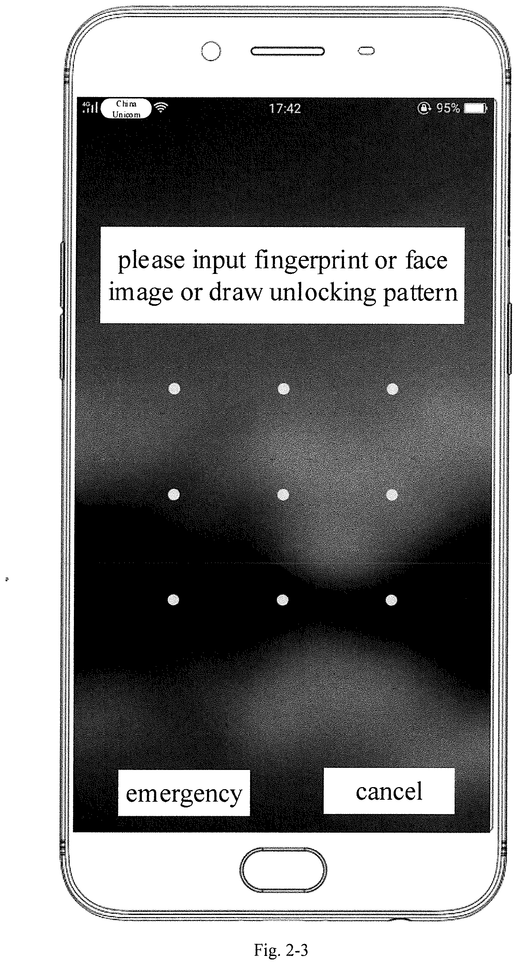

Fig. 2-3 is a schematic diagram illustrating an unlocking interface according to an embodiment of the present disclosure.

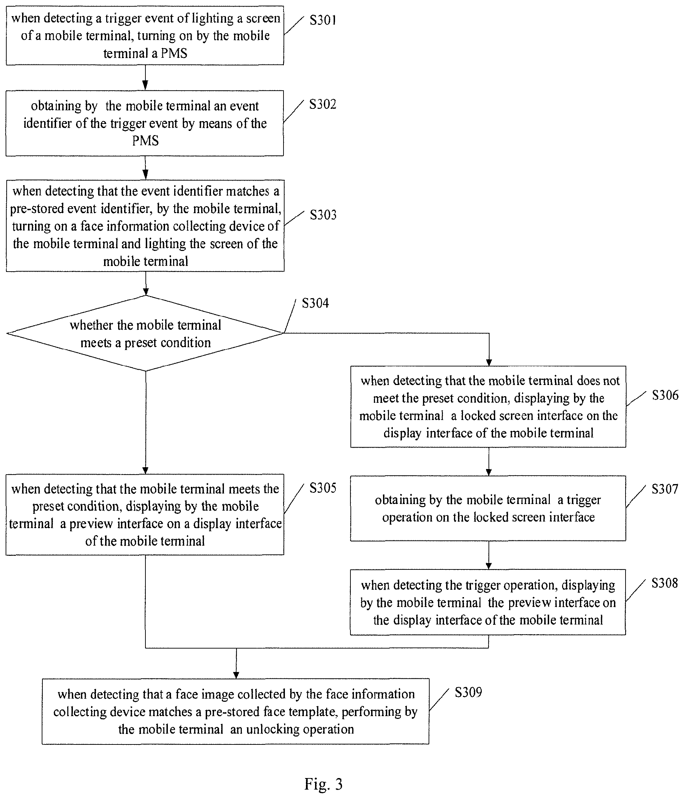

Fig. 3 is a flow chart illustrating an unlocking method according to another embodiment of the present disclosure.

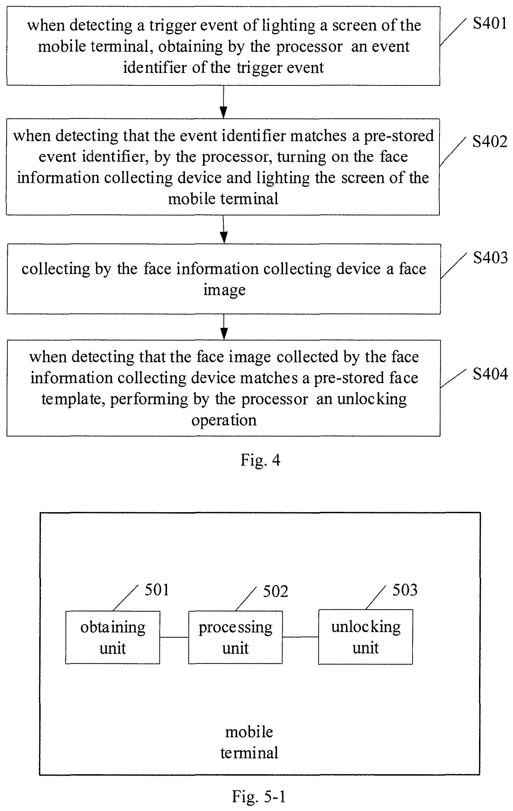

Fig. 4 is a flow chart illustrating an unlocking method according to another embodiment of the present disclosure.
Fig. 5-1 is a block diagram illustrating a mobile terminal according to an embodiment of the present disclosure.

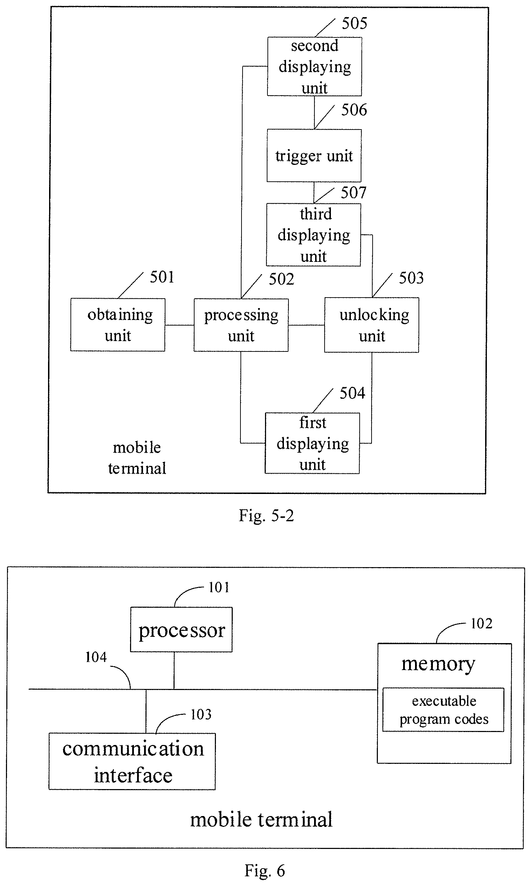

Fig. 5-2 is a block diagram illustrating a mobile terminal according to an embodiment of the present disclosure.
Fig. 6 is a block diagram illustrating a mobile terminal according to an embodiment of the present disclosure.

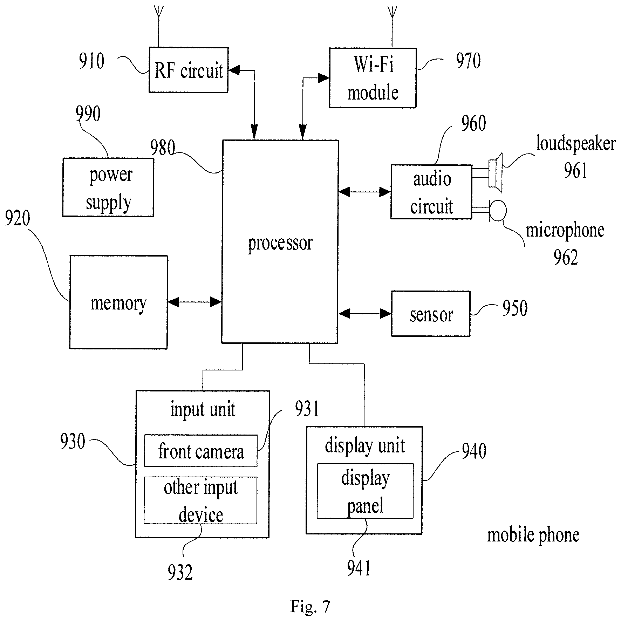

Fig. 7 is a block diagram illustrating a mobile terminal according to an embodiment of the present disclosure.

### DETAILED DESCRIPTION

To make those skilled in the art a better understanding of solutions of the present disclosure, the technical solutions in the embodiments of the present disclosure will be clearly and completely described in the following with reference to the drawings in the embodiments of the present disclosure. Obviously, the described embodiments are only a part of the embodiments of the present disclosure, and not all the embodiments. All other embodiments obtained by those skilled in the art based on the embodiments of the present disclosure without creative efforts are within the scope of the present disclosure.

In the specification, claims and the above drawings of the present disclosure, terms of "first" and "second" are only used for distinguishing different objects, not describing a specific order. It should be further understood that, when used in the specification, terms "comprising", "containing" and any transformations cover a non-exclusive inclusion. For example, a process, method, system, product, or device that comprises a series of acts or units is not limited to the listed acts or units, but optionally also includes acts or units not listed, or, optionally other acts or units inherent to these process, method, product, or device.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

The present disclosure relates to a mobile terminal, including a face information collecting device, a memory and a processor. The face information collecting device is configured to collect a face image. The memory is configured to store a face template. The processor is configured to carry out following actions, including: when detecting a trigger event of lighting a screen of the mobile terminal, obtaining an event identifier of the trigger event; when detecting that the event identifier matches a pre-stored event identifier, turning on the face information collecting device and lighting the screen of the mobile terminal; and when detecting that the face image collected by the face information collecting device matches the pre-stored face template, performing an unlocking operation.

The present disclosure relates to an unlocking method. The method includes the following. When detecting a trigger event of lighting a screen of a mobile terminal, an event identifier of the trigger event is obtained. When detecting that the event identifier matches a pre-stored event identifier, a face information collecting device of the mobile terminal is turned on and the screen of the mobile terminal is lighted. When detecting that a face image collected by the face information collecting device matches a pre-stored face template, an unlocking operation is performed.

The present disclosure relates to an unlocking method. The method is applicable to a mobile terminal including a face information collecting device, a memory and a processor. The method includes the following. When detecting a trigger event of lighting a screen of the mobile terminal, the processor obtains an event identifier of the trigger event. When detecting that the event identifier matches a pre-stored event identifier, the processor turns on the face information collecting device and lights the screen of the mobile terminal. The face information collecting device collects a face image. When detecting that the face image collected by the face information collecting device matches a pre-stored face template, the processor performs an unlocking operation.

The present disclosure relates to a mobile terminal including an obtaining unit, a processing unit and an unlocking unit. The obtaining unit is configured to carry out following actions, including: when detecting a trigger event of lighting a screen of the mobile terminal, obtaining an event identifier of the trigger event. The processing unit is configured to carry out following actions, including: when detecting that the event identifier matches a pre-stored event identifier, turning on a face information collecting device of the mobile terminal and lighting the screen of the mobile terminal. The unlocking unit is configured to carry out following actions, including: when detecting that a face image collected by the face information collecting device matches a pre-stored face template, performing an unlocking operation.

The present disclosure relates to a mobile terminal including a processor, a memory, a communication interface and a communication bus. The processor, the memory and the communication interface are coupled and communicate with each other by the communication bus. The memory is configured to store executable program codes. The communication interface is configured for wireless communication. The processor is configured to invoke the executable program codes stored in the memory to perform a part of or all acts of any method of the second aspect of the embodiments of the present disclosure as described above.

The present disclosure relates to a computer readable storage medium having stored computer programs for electronic data exchange. The computer programs cause a computer to perform a part of or all acts of any method of the embodiments of the present disclosure as described above. The computer includes a mobile terminal.

The present disclosure relates to a computer program product. The computer program product includes a non-transitory computer readable storage medium storing computer programs. The computer programs are operative to cause a computer to perform a part of or all acts of any method of the embodiments of the present disclosure as described above. The computer program product may be a software installation package. The computer includes a mobile terminal.

To better understand an unlocking method and related products provided in the embodiments of the present disclosure, the embodiments of the present disclosure will be described in detail below.

The mobile terminal related in the embodiments of the present disclosure may include handheld devices having wireless communication functions, in-vehicle devices, wearable devices, computing devices, other processing devices coupled to wireless modems, user equipment (UE), mobile stations (MS), terminal devices, and the like. For convenience of description, the devices mentioned above are collectively referred to as mobile terminals.

The mobile terminal described in the embodiment of the present disclosure is provided with a face information collecting device. The face information collecting device may be a general camera module, such as a front camera. The embodiments of the present disclosure will be described in detail below with reference to the drawings.

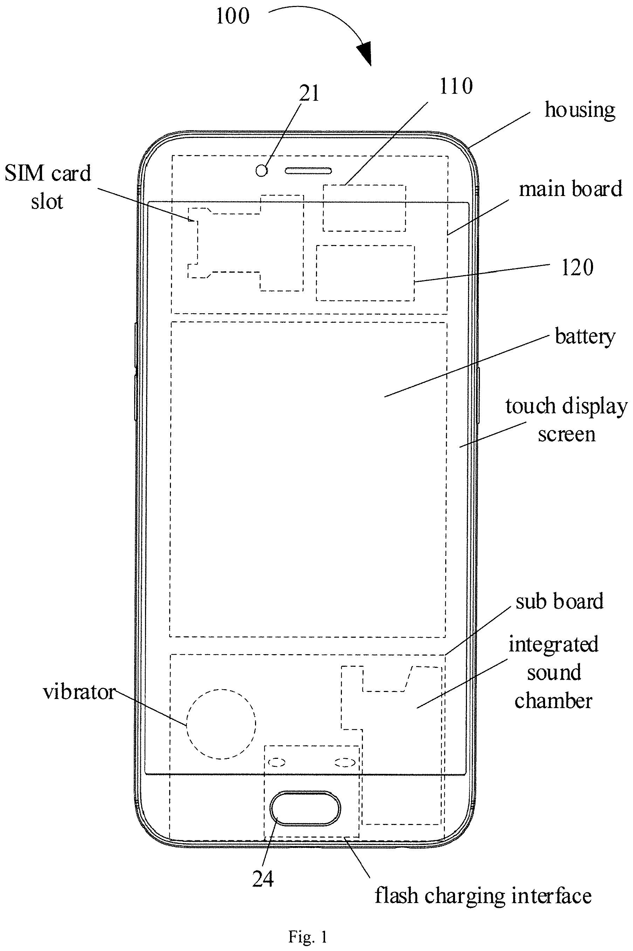

Fig. 1 is a schematic diagram illustrating a mobile terminal 100 according to an embodiment of the present disclosure. As illustrated in Fig. 1, the mobile terminal 100 includes a housing, a touch display screen, a main board, a battery and a sub board. The main board is provided with a front camera 21, processor 110, a memory 120, a subscriber identification module (SIM) card slot, etc. The sub board is provided with a vibrator, an integrated sound chamber and a VOOC (Voltage Open Loop Multi-Step Constant-Current Charging) flash charging interface. The front camera 21 forms the face information collecting device of the mobile terminal 100.

The face information collecting device is configured to collect a face image.

The memory 120 is configured to store a face template.

The processor 110 is configured to carry out following actions. When detecting a trigger event of lighting a screen of the mobile terminal, an event identifier of the trigger event is obtained. When detecting that the event identifier matches a pre-stored event identifier, the face information collecting device is turned on and the screen of the mobile terminal is lighted. When detecting that the face image collected by the face information collecting device matches the pre-stored face template, an unlocking operation is performed.

The front camera 21 is configured to collect the face image of the user. The processor 110 is configured to perform preprocessing on the face image after the face image is obtained and extract a face feature point from the face image; or send the face image to a server. The server may perform preprocessing on the face image and extract the face feature point from the face image.

It may be seen that, with the mobile terminal provided in the embodiments of the present disclosure, when detecting the trigger event of lighting the screen of the mobile terminal, the mobile terminal obtains the event identifier of the trigger event. When detecting that the event identifier matches the pre-stored event identifier, the face information collecting device is turned on and the screen of the mobile terminal is lighted. When detecting that the face image collected by the face information collecting device matches the pre-stored face template, the unlocking operation is performed. It may be seen that the mobile terminal performs the unlocking operation when detecting that the face image collected by the face information collecting device matches the pre-stored face template, thereby improving the security of the mobile terminal. Meanwhile, when detecting the event identifier matches the pre-stored event identifier, the mobile terminal turns on the face information collecting device and lights the screen in parallel, thereby improving the unlocking speed.

In one or more embodiments, the face information collecting device is turned on and the screen of the mobile terminal is lighted in parallel.

In one or more embodiments, the processor 110 is further configured to carry out following actions. A preview interface is displayed on a display interface of the mobile terminal when detecting that the mobile terminal meets a preset condition. The preview interface is configured to display the face image collected by the face information collecting device.

In one or more embodiments, the processor 110 is further configured to carry out following actions. When detecting that the mobile terminal does not meet the preset condition, a locked screen interface is displayed on the display interface of the mobile terminal; a trigger operation on the locked screen interface is obtained; and when detecting the trigger operation, the preview interface is displayed on the display interface of the mobile terminal.

In one or more embodiments, obtaining the trigger operation on the locked screen interface includes: displaying a trigger button for opening the preview interface on the locked screen interface of the mobile terminal; and obtaining a touch operation on the trigger button.

In one or more embodiments, obtaining the trigger operation on the locked screen interface includes: obtaining a sliding operation from the locked screen interface to an unlocking interface.

In one or more embodiments, obtaining the event identifier of the trigger event includes: when detecting the trigger event of lighting the screen of the mobile terminal, turning on a power management service (PMS); obtaining, by means of the PMS, the event identifier of the trigger event.

Fig. 2 is a flow chart illustrating an unlocking method according to an embodiment of the present disclosure. As illustrated in Fig. 2, the unlocking method includes the following.

At block S201, when detecting a trigger event of lighting a screen of a mobile terminal, the mobile terminal obtains an event identifier of the trigger event.

The trigger event of lighting the screen may include, but be not limited to, double-clicking a home key to brighten the screen, double-clicking the screen to brighten the screen, pressing a power key to brighten the screen, drawing ○ to enable the camera, drawing V to enable a flashlight, sliding up/down to brighten the screen, sliding left/light to brighten the screen, drawing M to brighten the screen, drawing W to brighten the screen.

At block S202, when detecting that the event identifier matches a pre-stored event identifier, the mobile terminal turns on a face information collecting device of the mobile terminal and lights the screen of the mobile terminal.

The mobile terminal may set and store at least one event identifier in advance. When detecting that the event identifier matches the pre-stored event identifier, the mobile terminal turns on the face information collecting device of the mobile terminal and lights the screen of the mobile terminal.

The pre-stored event identifier may be set by the user of the mobile terminal to conform to the usage habit of the user or may be set at the time of leaving the factory, which is not limited herein.

The pre-stored event identifier may include an event identifier corresponding to the double-clicking the home key to brighten the screen and an event identifier corresponding to the pressing the power key to brighten the screen, which is not limited herein.

When detecting that the event identifier matches the pre-stored event identifier, the mobile terminal turns on the face information collecting device and lights the screen in parallel, thereby improving the face unlocking speed.

The face information collecting device may be a front camera of the mobile terminal.

At block S203, when detecting that a face image collected by the face information collecting device matches a pre-stored face template, the mobile terminal performs an unlocking operation.

The mobile terminal collects the face image of the user through the front camera. After obtaining the face image, the mobile terminal may perform preprocessing on the face image and extract a face feature point, and the like. When detecting that the preprocessed face image matches the pre-stored face templates, the mobile terminal performs the unlocking operation.

It may be seen that, with the unlocking method provided in the embodiments of the present disclosure, when detecting the trigger event of lighting the screen of the mobile terminal, the mobile terminal obtains the event identifier of the trigger event. When detecting that the event identifier matches the pre-stored event identifier, the face information collecting device is turned on and the screen of the mobile terminal is lighted. When detecting that the face image collected by the face information collecting device matches the pre-stored face template, the unlocking operation is performed. It may be seen that the mobile terminal performs the unlocking operation when detecting that the face image collected by the face information collecting device matches the pre-stored face template, thereby improving the security of the mobile terminal. Meanwhile, when detecting the event identifier matches the pre-stored event identifier, the mobile terminal turns on the face information collecting device and lights the screen in parallel, thereby improving the unlocking speed.

In one or more embodiments, after turning on the face information collecting device of the mobile terminal and lighting the screen of the mobile terminal and before performing the unlocking operation when detecting that the face image collected by the face information collecting device matches the pre-stored face template, the method further includes the following. When detecting that the mobile terminal meets a preset condition, a preview interface is displayed on a display interface of the mobile terminal. The preview interface is configured to display the face image collected by the face information collecting device.

In detail, the mobile terminal is provided with a switch for launching the preview interface. After the mobile terminal turns on the face information collecting device of the mobile terminal and lights the screen of the mobile terminal, the preview interface is displayed on the display interface of the mobile terminal when detecting that the mobile terminal meets the preset condition, i.e., when detecting that the switch is in an open state. The preview interface is configured to display the face image collected by the face information collecting device of the mobile terminal. The effect diagram of the preview interface may be illustrated in Fig. 2-1. The preview interface is configured to display the face image collected by the face information collecting device, such that the user may adjusts a capturing angle based on the displayed face image.

In one or more embodiments, the method further includes the following. When detecting that the mobile terminal does not meet the preset condition, a locked screen interface is displayed on the display interface of the mobile terminal. A trigger operation on the locked screen interface is obtained. When detecting the trigger operation, the preview interface is displayed on the display interface of the mobile terminal.

In one or more embodiments, obtaining the trigger operation on the locked screen interface may include the following. A trigger button for opening the preview interface is displayed on the locked screen interface of the mobile terminal. A touch operation on the trigger button is obtained.

In detail, the effect diagram of the trigger button for opening the preview interface and displayed on the locked screen interface of the mobile terminal is illustrated in Fig. 2-2. After the touch operation on the trigger button displayed on the locked screen interface is detected, the display interface of the mobile terminal is switched from the locked screen interface to the preview interface.

In one or more embodiments, obtaining the trigger operation on the locked screen interface may include the following. A sliding operation from the current locked screen interface to an unlocking interface is obtained.

The unlocking interface is an interface for reminding the user to input a fingerprint or input a face image or draw an unlocking pattern. The corresponding effect diagram is illustrated in Fig. 2-3.

In one or more embodiments, when detecting the trigger event of lighting the screen of the mobile terminal, obtaining the event identifier of the trigger event includes the following. When detecting the trigger event of lighting the screen of the mobile terminal, a power management service (PMS) is turned on. The event identifier of the trigger event is obtained by means of the PMS.

Consistent with the embodiment illustrated in Fig. 2, Fig. 3 is a flow chart illustrating an unlocking method according to an embodiment of the present disclosure. As illustrated in Fig. 3, the unlocking method includes the following.

At block S301, when detecting a trigger event of lighting a screen of a mobile terminal, the mobile terminal turns on a PMS.

At block S302, the mobile terminal obtains an event identifier of the trigger event by means of the PMS.

At block S303, when detecting that the event identifier matches a pre-stored event identifier, the mobile terminal turns on a face information collecting device of the mobile terminal and lights the screen of the mobile terminal.

At block S304, the mobile terminal detects whether the mobile terminal meets a preset condition.

When detecting that the mobile terminal meets the preset condition, the mobile terminal performs acts in block S305 and S309. When detecting that the mobile terminal does not meet the preset condition, the mobile terminal performs acts in block S306 to S309.

At block S305, when detecting that the mobile terminal meets the preset condition, the mobile terminal displays a preview interface on a display interface of the mobile terminal. The preview interface is configured to display the face image collected by the face information collecting device.

At block S306, when detecting that the mobile terminal does not meet the preset condition, the mobile terminal displays a locked screen interface on the display interface of the mobile terminal.

At block S307, the mobile terminal obtains a trigger operation on the locked screen interface.

At block S308, when detecting the trigger operation, the mobile terminal displays the preview interface on the display interface of the mobile terminal.

At block S309, when detecting that a face image collected by the face information collecting device matches a pre-stored face template, the mobile terminal performs an unlocking operation.

The implementation manner of obtaining the trigger operation on the locked screen interface may be the following.

A trigger button for opening the preview interface is displayed on the locked screen interface of the mobile terminal. A touch operation on the trigger button is obtained, or a sliding operation from the current locked screen interface to an unlocking interface is obtained.

It may be seen that, with the unlocking method provided in the embodiments of the present disclosure, when detecting the trigger event of lighting the screen of the mobile terminal, the mobile terminal obtains the event identifier of the trigger event. When detecting that the event identifier matches the pre-stored event identifier, the face information collecting device is turned on and the screen of the mobile terminal is lighted. When detecting that the face image collected by the face information collecting device matches the pre-stored face template, the unlocking operation is performed. It may be seen that the mobile terminal performs the unlocking operation when detecting that the face image collected by the face information collecting device matches the pre-stored face template, thereby improving the security of the mobile terminal. Meanwhile, when detecting the event identifier matches the pre-stored event identifier, the mobile terminal turns on the face information collecting device and lights the screen in parallel, thereby improving the unlocking speed.

Consistent with the embodiment illustrated in Fig. 2, Fig. 4 is a flow chart illustrating an unlocking method according to an embodiment of the present disclosure. The method is applicable to a mobile terminal including a face information collecting device, a memory and a processor. As illustrated in Fig. 4, the unlocking method includes the following.

At block S401, when detecting a trigger event of lighting a screen of the mobile terminal, the processor obtains an event identifier of the trigger event.

At block S402, when detecting that the event identifier matches a pre-stored event identifier, the processor turns on the face information collecting device and lights the screen of the mobile terminal.

At block S403, the face information collecting device collects a face image.

At block S404, when detecting that the face image collected by the face information collecting device matches a pre-stored face template, the processor performs an unlocking operation.

In one or more embodiments, after turning on by the processor the face information collecting device of the mobile terminal and lighting by the processor the screen of the mobile terminal and before performing by the processor the unlocking operation when detecting that the face image collected by the face information collecting device matches the pre-stored face template, the method further includes the following.

When detecting that the mobile terminal meets a preset condition, the processor displays a preview interface on a display interface of the mobile terminal. The preview interface is configured to display the face image collected by the face information collecting device.

In one or more embodiments, the method further includes the following.

When detecting that the mobile terminal does not meet the preset condition, the processor displays a locked screen interface on the display interface of the mobile terminal.

The processor obtains a trigger operation on the locked screen interface.

When detecting the trigger operation, the processor displays the preview interface on the display interface of the mobile terminal.

In one or more embodiments, obtaining by the processor the trigger operation on the locked screen interface includes the following.

The processor displays a trigger button for opening the preview interface on the locked screen interface of the mobile terminal.

The processor obtains a touch operation on the trigger button.

In one or more embodiments, obtaining by the processor the trigger operation on the locked screen interface includes the following.

The processor obtains a sliding operation from the current locked screen interface to an unlocking interface.

In one or more embodiments, when detecting the trigger event of lighting the screen of the mobile terminal, obtaining by the processor the event identifier of the trigger event includes the following.

When detecting the trigger event of lighting the screen of the mobile terminal, the processor turns on a power management service (PMS);

The processor obtains the event identifier of the trigger event, by means of the PMS.

It may be seen that, with the unlocking method provided in the embodiments of the present disclosure, when detecting the trigger event of lighting the screen of the mobile terminal, the mobile terminal obtains the event identifier of the trigger event. When detecting that the event identifier matches the pre-stored event identifier, the face information collecting device is turned on and the screen of the mobile terminal is lighted. When detecting that the face image collected by the face information collecting device matches the pre-stored face template, the unlocking operation is performed. It may be seen that the mobile terminal performs the unlocking operation when detecting that the face image collected by the face information collecting device matches the pre-stored face template, thereby improving the security of the mobile terminal. Meanwhile, when detecting the event identifier matches the pre-stored event identifier, the mobile terminal turns on the face information collecting device and lights the screen in parallel, thereby improving the unlocking speed.

The following may be apparatus embodiments of the present disclosure. The apparatus embodiments of the present disclosure are configured to implement the method implemented by the method embodiments of the present disclosure. Fig. 5-1 is a block diagram illustrating a mobile terminal according to an embodiment of the present disclosure. As illustrated in Fig. 5-1, the mobile terminal includes an obtaining unit 501, a processing unit 502 and an unlocking unit 503.

The obtaining unit 501 is configured to, when detecting a trigger event of lighting a screen of the mobile terminal, obtain an event identifier of the trigger event.

The processing unit 502 is configured to, when detecting that the event identifier matches a pre-stored event identifier, turn on a face information collecting device of the mobile terminal and light the screen of the mobile terminal.

The unlocking unit 503 is configured to, when detecting that a face image collected by the face information collecting device matches a pre-stored face template, perform an unlocking operation.

Fig. 5-2 is a block diagram illustrating a mobile terminal according to an embodiment of the present disclosure. As illustrated in Fig. 5-2, the mobile terminal may include the obtaining unit 501, the processing unit 502 and the unlocking unit 503 in the embodiment of the Fig. 5-1.

In one or more embodiments, the mobile terminal may further include a first displaying unit 504.

The first displaying unit 504 is further configured to display a preview interface on a display interface of the mobile terminal when detecting that the mobile terminal meets a preset condition. The preview interface is configured to display the face image collected by the face information collecting device.

In one or more embodiments, the mobile terminal may further include a second displaying unit 505, a trigger unit 506 and a third displaying unit 507.

The second displaying unit 505 is configured to: when detecting that the mobile terminal does not meet the preset condition, display a locked screen interface on the display interface of the mobile terminal.

The trigger unit 506 is configured to obtain a trigger operation on the locked screen interface.

The third displaying unit 505 is configured to, when detecting the trigger operation, display the preview interface on the display interface of the mobile terminal.

In one or more embodiments, the trigger unit 506 is configured to display a trigger button for opening the preview interface on the locked screen interface of the mobile terminal; and obtain a touch operation on the trigger button.

In one or more embodiments, the trigger unit 506 is configured to obtain a sliding operation from the current locked screen interface to an unlocking interface.

In one or more embodiments, the obtaining unit 501 is configured to: when detecting the trigger event of lighting the screen of the mobile terminal, turn on a power management service (PMS); and obtain, by means of the PMS, the event identifier of the trigger event.

The implementation of the various units may refer to the description of related acts in the corresponding embodiments of Fig. 2 or Fig. 3, and details are not described herein.

It should be noted that the mobile terminal described in the apparatus embodiments of the present disclosure is presented in the form of functional units. The term "unit" as used herein shall be understood as the broadest possible meaning, and the object for implementing the functions described for each "unit" may be, for example, an ASIC (Application Specific Integrated Circuit), a single circuit, a processor (shared, dedicated or chipset) for executing one or more software or firmware, a memory, a combinational logic, and/or other suitable component that perform the functions described above.

For example, when the obtaining unit 501 detects the trigger event of lighting the screen of the mobile terminal, the function of obtaining the event identifier of the trigger event may be implemented by the mobile terminal illustrated in Fig. 6. In detail, the processor 101 obtains the event identifier of the trigger event when the trigger event of lighting the screen of the mobile terminal is detected by invoking executable program codes in the memory 102.

It may be seen that, with the mobile terminal provided in the embodiments of the present disclosure, when detecting the trigger event of lighting the screen of the mobile terminal, the mobile terminal obtains the event identifier of the trigger event. When detecting that the event identifier matches the pre-stored event identifier, the face information collecting device is turned on and the screen of the mobile terminal is lighted. When detecting that the face image collected by the face information collecting device matches the pre-stored face template, the unlocking operation is performed. It may be seen that the mobile terminal performs the unlocking operation when detecting that the face image collected by the face information collecting device matches the pre-stored face template, thereby improving the security of the mobile terminal. Meanwhile, when detecting the event identifier matches the pre-stored event identifier, the mobile terminal turns on the face information collecting device and lights the screen in parallel, thereby improving the unlocking speed.

An embodiment of the present disclosure provides another mobile terminal. As illustrated in Fig. 6, the mobile terminal includes a processor 101, a memory 102, a communication interface 103, and a communication bus 104. The processor 101, the memory 102 and the communication interface 103 are coupled and communicate with each other by the communication bus 104. The processor 101 controls wireless communication with an external cellular network via the communication interface 103. The communication interface 103 includes, but is not limited to, an antenna, an amplifier, a transceiver, a coupler, a low noise amplifier (LNA), a duplexer, and the like. The memory 102 includes at least one of: a random-access memory, a non-volatile memory and an external memory. The memory 102 is configured to store executable program codes. The processor 101 is configured to invoke the executable program codes stored in the memory 102 to perform any method in the embodiments of the present disclosure as described above.

The processor 101 is configured to: when detecting a trigger event of lighting a screen of the mobile terminal, obtain an event identifier of the trigger event; when detecting that the event identifier matches a pre-stored event identifier, turn on a face information collecting device and light the screen of the mobile terminal; and when detecting that the face image collected by the face information collecting device matches the pre-stored face template, perform an unlocking operation.

In one or more embodiments, the processor 101 is further configured to: after turning on the face information collecting device and lighting the screen of the mobile terminal and before performing the unlocking operation, display a preview interface on a display interface of the mobile terminal when detecting that the mobile terminal meets a preset condition. The preview interface is configured to display the face image collected by the face information collecting device.

In one or more embodiments, the processor 101 is further configured to: when detecting that the mobile terminal does not meet the preset condition, display a locked screen interface on the display interface of the mobile terminal; obtain a trigger operation on the locked screen interface; and when detecting the trigger operation, display the preview interface on the display interface of the mobile terminal.

In one or more embodiments, when obtaining the trigger operation on the locked screen interface, the processor 101 is configured to: display a trigger button for opening the preview interface on the locked screen interface of the mobile terminal; and obtain a touch operation on the trigger button.

In one or more embodiments, when obtaining the trigger operation on the locked screen interface, the processor 101 is configured to: obtain a sliding operation from the current locked screen interface to an unlocking interface.

In one or more embodiments, when obtaining the event identifier of the trigger event, the processor 101 is configured to: when detecting the trigger event of lighting the screen of the mobile terminal, turn on a power management service (PMS); obtain, by means of the PMS, the event identifier of the trigger event.

The implementation of the various units may refer to the description of related acts in the corresponding embodiments of Fig. 2 or Fig. 3, and details are not described herein.

It may be seen that, with the mobile terminal provided in the embodiments of the present disclosure, when detecting the trigger event of lighting the screen of the mobile terminal, the mobile terminal obtains the event identifier of the trigger event. When detecting that the event identifier matches the pre-stored event identifier, the face information collecting device is turned on and the screen of the mobile terminal is lighted. When detecting that the face image collected by the face information collecting device matches the pre-stored face template, the unlocking operation is performed. It may be seen that the mobile terminal performs the unlocking operation when detecting that the face image collected by the face information collecting device matches the pre-stored face template, thereby improving the security of the mobile terminal. Meanwhile, when detecting the event identifier matches the pre-stored event identifier, the mobile terminal turns on the face information collecting device and lights the screen in parallel, thereby improving the unlocking speed.

An embodiment of the present disclosure provides another mobile terminal as illustrated in Fig. 7. For the convenience of description, only parts related to the embodiment of the present disclosure are illustrated. For technical details not disclosed, the methods provided in the embodiments of the present disclosure may be referred to. The mobile terminal may be any mobile terminal device such a mobile phone, a tablet computer, a PDA (personal digital assistant), a point of sales (POS), a vehicle-mounted computer. The mobile phone is take as an example in the following.

Fig. 7 is a block diagram illustrating a partial structure of a mobile phone related to a mobile terminal provided in an embodiment of the present disclosure. As illustrated in Fig. 7, the mobile phone includes a radio frequency (RF) circuit 910, a memory 920, an input unit 930, a display unit 940, a sensor 950, an audio circuit 960, a wireless fidelity (Wi-Fi) module 970, a processor 980 and a power supply 990. It may be understood by those skilled in the art that, the structures illustrated in Fig. 7 do not limit the structures of the mobile phone. The mobile phone may include less or more components than those illustrated in Fig. 7 or combinations thereof or have a different arrangement of components.

The following describes the components of the mobile phone in detail with reference to Fig. 7.

The RF circuit 910 may be configured to receive or transmit information. The RF circuit 910 includes but is not limited to an antenna, at least one amplifier, a transceiver, a coupler, a low noise amplifier (LNA), a diplexer and the like. Furthermore, the RF circuit 910 may be further configured to communicate with other devices via wireless communication and network. The above wireless communication may adopt any communication standard or protocol, which includes but is not limited to global system of mobile communication (GSM), general packet radio service (GPRS), code division multiple access (CDMA), wideband code division multiple access (WCDMA), long term evolution (LTE), e-mail, short messaging service (SMS) and the like.

The memory 920 may be configured to store software programs or modules. The processor 980 is configured to execute various functional applications and data processes by running the software programs and modules stored in the memory 920. The memory 920 may mainly include a program storage region and a data storage region. The program storage region may store an operation system, at least one function required applications (such as an application having a sound playing function, an application having an image playing function) and the like. The data storage region may store data produced by using the mobile phone (such as audio data, an address book) and the like. In addition, the memory 920 may include a high speed random access memory and may include a non-volatility memory, such as at least one disk memory, a flash memory, or other volatility solid state memory.

The input unit 930 may be configured to receive figure or character information inputted and generate a key signal input related to a user setup or function control of the mobile phone. In detail, the input unit 930 may include a front camera 931 and other input devices 932. The front camera 931 may be configured to collect face information of the user. In addition to the front camera 931, the input unit 930 may further include other input devices 932. In detail, the other input devices 932 may include but not limited to one or more of a fingerprint recognition module, a physical keyboard, a functional key (such as a volume control key, a switch key and the like), a trackball, a mouse, and a joystick.

The display unit 940 may be configured to display information inputted by the user or information provided to the user or various menus of the mobile phone. The display unit 940 may include a display panel 941. In an embodiment, the display panel 941 may be configured as a liquid crystal display (LCD), an organic light-emitting diode (OLED) and the like. In an embodiment, the front camera 931 and the display panel 941 are two independent components to implement the input and input functions of the mobile phone. In some embodiments, the front camera 931 and the display panel 941 may be integrated to realize the input and output of the mobile phone.

The mobile phone 900 may further include at least one sensor 950, such as an optical sensor, a motion sensor and other sensors. In detail, the optical sensor may include a surrounding light sensor and a proximity sensor. The surrounding light sensor may adjust a luminance of the display panel 941 according to surrounding lights. The proximity sensor may close the display panel 941 and/or backlight when the mobile phone moves near ears of the user. The motion sensor may include an acceleration sensor, for measuring the acceleration value in various directions via the acceleration sensor, measuring a value and a direction of gravity when the mobile phone is static, and identifying a state of the mobile phone (such as landscape screen and portrait screen switching), shake related functions (such as a pedometer, a knocking) and the like. Furthermore, the mobile phone may be configured with a gyroscope, a barometer, a thermometer, an infrared sensor and other sensors.

The audio circuit 960, a loudspeaker 961 and a microphone 962 may provide an audio interface between the user and the mobile phone. The audio circuit 960 may transmit an electrical signal converted from the audio data received to the loudspeaker 961. The loudspeaker 961 converts the electrical signal to a sound signal and output the sound signal. In another aspect, the microphone 962 may convert gathered sound singles to electrical signals. The audio circuit 960 receives and converts the electrical signals to audio data and outputs the audio data to the processor 980 to be processed. The audio data processed by the processor 980 may be transmitted to another mobile phone via the RF circuit 910 or may be stored in the memory 920 to be subsequently processed.

Wi-Fi is a short distance wireless communication technology. The mobile phone may help the user to receive or send an e-mail, search webpages, access to stream medium via the Wi-Fi module 970. The Wi-Fi module 970 provides a wireless broadband Internet access. Although the Wi-Fi module 970 is illustrated in Fig. 7, it may be understood that, the Wi-Fi module 970 is not necessary for the mobile phone 900, thus it may be omitted according to demands.

The processor 980 is a control center of the mobile phone, which utilizes various interfaces and wires to connect various parts of the mobile phone. By running or executing the software program and/or modules stored in the memory 920, and by invoking data stored in the memory 920, the various functions and data processing functions may be executed, thus integrally monitoring the mobile phone. In an embodiment, the processor 980 may include one or more processing units. In an embodiment, the processor 980 may be integrated with an application processor or a modem processor. The application processor mainly processes the operation system, a user interface and an application. The modem processor mainly processes wireless communication. It may be understood that, the above modem controller may be not integrated in the processor 980.

The mobile phone 900 may further includes a power supply 990 (such as a battery) for providing powers to various parts of the mobile phone. Alternatively, the power supply may be logically connected to a power management system and the processor 980, thereby managing a charging, discharging and power consumption via the power management system.

Although not illustrated, the mobile phone may further include a Bluetooth module or the like, and details are not described herein again.

In the embodiments illustrated in Fig. 2 and Fig. 3, each act flow may be implemented based on the structure of the mobile phone.

In the embodiments illustrated in Fig. 5-1 and Fig. 5-2, each function unit may be implemented based on the structure of the mobile phone.

An embodiment of the present disclosure further provides a computer program product. The computer program product includes a non-transitory computer readable storage medium storing computer programs. The computer programs are operative to cause a computer to perform a part of or all acts of any method of the embodiments of the present disclosure as described above.

An embodiment of the present disclosure further provides a computer readable storage medium having stored computer programs. The computer programs are configured to to perform a part of or all acts of any method of the embodiments of the present disclosure as described above.

It should be noted that, for the foregoing method embodiments, for a brief description, they are all expressed as a series of act combinations, but those skilled in the art should know that the present disclosure is not subject to the described act sequence. Some acts may be performed in other sequences or concurrently in accordance with the present disclosure. Secondly, those skilled in the art should also understand that the embodiments described in the specification are all preferred embodiments, and the acts and modules involved are not necessarily required by the present disclosure.

In the foregoing embodiments, the descriptions of the various embodiments have their respective focuses, and the parts that are not detailed in a certain embodiment may refer to related descriptions of other embodiments.

In the several embodiments provided in the present disclosure, the disclosed device may be implemented in other manners. For example, the device embodiments described above are merely illustrative. For example, the division of the above units is only a logical function division. In actual implementation, there may be another division manner. For example, multiple units or components may be combined or integrated to another system, or some features may be ignored or not executed. In addition, the mutual coupling or direct coupling or communication connection illustrated or discussed may be an indirect coupling or communication connection through some interfaces, devices or units, which may be electrical or otherwise.

The units described above as separate components may or may not be physically separated, and the components displayed as units may or may not be physical units, i.e., the units and components may be in one place or distributed to multiple network units. Some or all the units may be selected according to actual needs to achieve the purpose of the solutions of the embodiments.

In addition, each functional unit in each embodiment of the present disclosure may be integrated into one processing unit, or each unit may exist physically separately, or two or more units may be integrated into one unit. The above integrated unit may be implemented in the form of hardware or in the form of a software functional unit.

The integrated unit described above, if implemented in the form of a software functional unit and sold or used as a standalone product, may be stored in a computer readable memory. Based on such understanding, the technical solutions of the present disclosure essentially, or a part contributing to the prior art in the technical solutions of the present disclosure, or all or part of the technical solutions of the present disclosure may be embodied in the form of a software product. The computer software product is stored in a memory and includes instructions for causing a computer device (which may be a personal computer, server or network device, etc.) to perform all or part of the acts of the above-described methods of various embodiments of the present disclosure. The foregoing memory includes: a U disk, a Read-Only Memory (ROM), a Random Access Memory (RAM), a removable hard disk, a magnetic disk, or an optical disk, and the like, which may store program codes.

Those skilled in the art may understand that all or part of the acts of the foregoing embodiments may be completed by a program to instruct related hardware. The program may be stored in a computer readable memory, and the memory may include: a flash disk, a Read-Only Memory (ROM), a Random Access Memory (RAM), a disk or a CD.

The embodiments of the present disclosure have been described in detail above, and the principles and implementations of the present disclosure are described herein by using specific examples. The description of the above embodiments is only for helping to understand the method of the present disclosure and its core ideas. It would be appreciated by those skilled in the art that the above embodiments cannot be construed to limit the present invention and changes, alternatives, and modifications can be made in the embodiments without departing from principles and scope of the present invention.

## Claims

1. A mobile terminal (100), comprising:
a face information collecting device, configured to collect a face image;
a memory (120), configured to prestore a face template; and
a processor (110), configured to carry out following actions, comprising:
when detecting a trigger event of lighting a screen of the mobile terminal, obtaining (S201) an event identifier of the trigger event;
when detecting that the event identifier matches a pre-stored event identifier, turning (S202) on the face information collecting device and lighting (S202) the screen of the mobile terminal, wherein turning (S202) on the face information collecting device and lighting (S202) the screen of the mobile terminal comprises: turning (S202) on the face information collecting device and lighting (S202) the screen of the mobile terminal in parallel;
detecting whether a switch for launching a preview interface is in an open state;
when detecting that the switch is in the open state, displaying the preview interface on a display interface of the mobile terminal, the preview interface being configured to display the face image collected by the face information collecting device; and
when detecting that the face image collected by the face information collecting device matches the pre-stored face template, performing (S203) an unlocking operation.

2. The mobile terminal of claim 1, wherein, the processor (110) is further configured to carry out following actions, comprising:
when detecting that the switch is not in the open state, displaying (S306) a locked screen interface on the display interface of the mobile terminal;
obtaining (S307) a trigger operation on the locked screen interface; and
when detecting the trigger operation, displaying (S308) the preview interface on the display interface of the mobile terminal.

3. The mobile terminal of claim 2, wherein obtaining (S307) the trigger operation on the locked screen interface comprises:
displaying a trigger button for opening the preview interface on the locked screen interface of the mobile terminal; and
obtaining a touch operation on the trigger button.

4. The mobile terminal of claim 2, wherein obtaining (S307) the trigger operation on the locked screen interface comprises:
obtaining a sliding operation from the locked screen interface to an unlocking interface.

5. The mobile terminal of any one of claims 1 to 4, wherein obtaining (S201) the event identifier of the trigger event comprises:
when detecting the trigger event of lighting the screen of the mobile terminal, turning on (S301) a power management service (PMS);
obtaining (S302), by means of the PMS, the event identifier of the trigger event.

6. An unlocking method, comprising:
when detecting a trigger event of lighting a screen of a mobile terminal, obtaining (S201) an event identifier of the trigger event;
when detecting that the event identifier matches a pre-stored event identifier, turning (S202) on a face information collecting device of the mobile terminal and lighting (S202) the screen of the mobile terminal, wherein turning (S202) on the face information collecting device and lighting (S202) the screen comprises: turning (S202) on the face information collecting device and lighting (S202) the screen in parallel;
detecting whether a switch for launching a preview interface is in an open state;
when detecting that the switch is in the open state, displaying the preview interface on a display interface of the mobile terminal, the preview interface being configured to display the face image collected by the face information collecting device; and
when detecting that the face image collected by the face information collecting device matches a pre-stored face template, performing (S203) an unlocking operation.

7. The method of claim 6, further comprising:
when detecting that the switch is not in the open state, displaying (S306) a locked screen interface on the display interface of the mobile terminal;
obtaining (S307) a trigger operation on the locked screen interface; and
when detecting the trigger operation, displaying (S308) the preview interface on the display interface of the mobile terminal.

8. The method of claim 7, wherein obtaining (S307) the trigger operation on the locked screen interface comprises:
displaying a trigger button for opening the preview interface on the locked screen interface of the mobile terminal; and
obtaining a touch operation on the trigger button.

9. The method of claim 7, wherein obtaining (S307) the trigger operation on the locked screen interface comprises:
obtaining a sliding operation from the locked screen interface to an unlocking interface.

10. The method of any one of claims 6 to 9, wherein obtaining (S201) the event identifier of the trigger event comprises:
when detecting the trigger event of lighting the screen of the mobile terminal, turning (S301) on a power management service (PMS);
obtaining (S302), by means of the PMS, the event identifier of the trigger event.

11. A computer readable storage medium having stored computer programs for electronic data exchange, wherein the computer programs cause a mobile terminal to perform the unlocking method according to any one of claims 6 to 10.

## Patentansprüche

1. Mobiles Endgerät (100), das Folgendes umfasst:
eine Gesichtsinformations-Sammelvorrichtung, die dazu ausgebildet ist, ein Gesichtsbild zu erfassen;
einen Speicher (120), der dazu ausgebildet ist, eine Gesichtsvorlage vorzuspeichern; und
einen Prozessor (110), der dazu ausgebildet ist, die folgenden Aktionen auszuführen, und der Folgendes umfasst:
bei Erkennung eines Auslöseereignisses der Beleuchtung eines Bildschirms des mobilen Endgerätes, Erhalten (S201) einer Ereigniskennung des Auslöseereignisses;
bei Erkennung, dass die Ereigniskennung mit einer vorgespeicherten Ereigniskennung übereinstimmt, Einschalten (S202) der Gesichtsinformations-Sammelvorrichtung und Beleuchten (S202) des Bildschirms des mobilen Endgerätes, wobei das Einschalten (S202) der Gesichtsinformations-Sammelvorrichtung und das Beleuchten (S202) des Bildschirms des mobilen Endgerätes Folgendes umfasst: Einschalten (S202) der Gesichtsinformations-Sammelvorrichtung und gleichzeitiges Beleuchten (S202) des Bildschirms des mobilen Endgerätes;
Erkennen, ob sich ein Schalter zum Starten einer Vorschauoberfläche in einem offenen Zustand befindet;
bei Erkennung, dass sich der Schalter im offenen Zustand befindet, Anzeigen der Vorschauschnittstelle auf einer Anzeigeschnittstelle des mobilen Endgerätes, wobei die Vorschauschnittstelle dazu ausgebildet ist, das von der Gesichtsinformations-Sammelvorrichtung erfasste Gesichtsbild anzuzeigen; und
bei Erkennung, dass das von der Gesichtsinformations-Sammelvorrichtung erfasste Bild mit der vorgespeicherten Gesichtsvorlage übereinstimmt, Durchführen (S203) eines Entriegelungsvorgangs.

2. Mobiles Endgerät nach Anspruch 1, wobei der Prozessor (110) ferner dazu ausgebildet ist, die folgenden Aktionen auszuführen, Folgendes umfassend:
bei Erkennung, dass sich der Schalter nicht im geöffneten Zustand befindet, Anzeigen (S306) einer Schnittstelle des verriegelten Bildschirms auf der Anzeigeoberfläche des mobilen Endgerätes;
Erhalten (S307) einer Auslöseoperation auf der Schnittstelle des verriegelten Bildschirms; und
bei Erkennung der Auslöseoperation, Anzeigen (S308) der Vorschauschnittstelle auf der Anzeigeschnittstelle des mobilen Endgerätes.

3. Mobiles Endgerät nach Anspruch 2, wobei das Erhalten (S307) der Auslöseoperation auf der Schnittstelle des verriegelten Bildschirms Folgendes umfasst:
Anzeigen einer Auslösertaste zum Öffnen der Vorschauschnittstelle auf der Schnittstelle des verriegelten Bildschirms des mobilen Endgerätes; und
Erhalten einer Berührungsoperation auf der Auslösertaste.

4. Mobiles Endgerät nach Anspruch 2, wobei das Erhalten (S307) der Auslöseoperation auf der Schnittstelle des verriegelten Bildschirms Folgendes umfasst:
Erhalten einer Gleitoperation von der Schnittstelle des verriegelten Bildschirms zu einer Entriegelungsschnittstelle.

5. Mobiles Endgerät nach einem beliebigen der Ansprüche 1 bis 4, wobei das Erhalten (S201) der Ereigniskennung des Auslöseereignisses Folgendes umfasst:
bei Erkennung des Auslöseereignisses der Beleuchtung des Bildschirms des mobilen Endgerätes, Einschalten (S301) eines Energieverwaltungsdienstes (PMS);
Erhalten (S302), mit Hilfe des PMS, der Ereigniskennung des Auslöseereignisses.

6. Entriegelungsverfahren, das Folgendes umfasst:
bei Erkennung eines Auslöseereignisses der Beleuchtung eines Bildschirms des mobilen Endgerätes, Erhalten (S201) einer Ereigniskennung des Auslöseereignisses;
bei Erkennung, dass die Ereigniskennung mit einer vorgespeicherten Ereigniskennung übereinstimmt, Einschalten (S202) einer Gesichtsinformations-Sammelvorrichtung des mobilen Endgerätes und Beleuchten (S202) des Bildschirms des mobilen Endgerätes, wobei das Einschalten (S202) der Gesichtsinformations-Sammelvorrichtung und das Beleuchten (S202) des Bildschirms Folgendes umfasst:
Einschalten (S202) der Gesichtsinformations-Sammelvorrichtung und gleichzeitiges Beleuchten (S202) des Bildschirms;
Erkennen, ob sich ein Schalter zum Starten einer Vorschauschnittstelle in einem offenen Zustand befindet;
bei Erkennung, dass sich der Schalter im offenen Zustand befindet, Anzeigen der Vorschauschnittstelle auf einer Anzeigeschnittstelle des mobilen Endgerätes, wobei die Vorschauschnittstelle dazu ausgebildet ist, das von der Gesichtsinformations-Sammelvorrichtung erfasste Gesichtsbild anzuzeigen; und
bei Erkennung, dass das von der Gesichtsinformations-Sammelvorrichtung erfasste Bild mit einer vorgespeicherten Gesichtsvorlage übereinstimmt, Durchführen (S203) eines Entriegelungsvorgangs.

7. Verfahren nach Anspruch 6, das ferner Folgendes umfasst:
bei Erkennung, dass sich der Schalter nicht im geöffneten Zustand befindet, Anzeigen (S306) einer Schnittstelle des verriegelten Bildschirms auf der Anzeigeschnittstelle des mobilen Endgerätes;
Erhalten (S307) einer Auslöseoperation auf der Schnittstelle des verriegelten Bildschirms; und
bei Erkennung der Auslöseoperation, Anzeigen (S308) der Vorschauschnittstelle auf der Anzeigeschnittstelle des mobilen Endgerätes.

8. Verfahren nach Anspruch 7, wobei das Erhalten (S307) der Auslöseoperation auf der Oberfläche des verriegelten Bildschirms Folgendes umfasst:
Anzeigen einer Auslösertaste zum Öffnen der Vorschauschnittstelle auf der Oberfläche des verriegelten Bildschirms des mobilen Endgerätes; und
Erhalten einer Berührungsoperation auf der Auslösertaste.

9. Verfahren nach Anspruch 7, wobei das Erhalten (S307) der Auslöseoperation auf der Oberfläche des verriegelten Bildschirms Folgendes umfasst:
Erhalten einer Gleitoperation von der Schnittstelle des verriegelten Bildschirms zu einer Entriegelungsschnittstelle.

10. Verfahren nach einem beliebigen der Ansprüche 6 bis 9, wobei das Erhalten (S201) der Ereigniskennung des Auslöseereignisses Folgendes umfasst:
bei Erkennung des Auslöseereignisses der Beleuchtung des Bildschirms des mobilen Endgerätes, Einschalten (S301) eines Energieverwaltungsdienstes (PMS);
Erhalten (S302), mit Hilfe des PMS, der Ereigniskennung des Auslöseereignisses.

11. Computerlesbares Speichermedium, auf dem Computerprogramme für elektronischen Datenaustausch gespeichert sind, wobei die Computerprogramme ein mobiles Endgerät veranlassen, das Entriegelungsverfahren gemäß einem der Ansprüche 6 bis 10 durchzuführen.

## Revendications

1. Terminal mobile (100), comprenant :
un dispositif de collecte d'informations de visage, configuré pour collecter une image de visage ;
une mémoire (120), configurée pour pré-mémoriser un modèle de visage ; et
un processeur (110), configuré pour mettre en œuvre les actions suivantes, comprenant :
lors de la détection d'un événement déclencheur d'éclairage d'un écran du terminal mobile, l'obtention (S201) d'un identifiant d'événement de l'événement déclencheur ;
lors de la détection du fait que l'identifiant d'événement correspond à un identifiant d'événement pré-mémorisé, l'activation (S202) du dispositif de collecte d'informations de visage et l'éclairage (S202) de l'écran du terminal mobile, l'activation (S202) du dispositif de collecte d'informations de visage et l'éclairage (S202) de l'écran du terminal mobile comprenant : l'activation (S202) du dispositif de collecte d'informations de visage et l'éclairage (S202) de l'écran du terminal mobile en parallèle ;
la détection du fait qu'un commutateur pour lancer une interface de prévisualisation est dans un état ouvert ;
lors de la détection du fait que le commutateur est dans l'état ouvert, l'affichage de l'interface de prévisualisation sur une interface d'affichage du terminal mobile, l'interface de prévisualisation étant configurée pour afficher l'image de visage collectée par le dispositif de collecte d'informations de visage ; et
lors de la détection du fait que l'image de visage collectée par le dispositif de collecte d'informations de visage correspond au modèle de visage pré-mémorisé, la réalisation (S203) d'une opération de déverrouillage.

2. Terminal mobile selon la revendication 1, le processeur (110) étant en outre configuré pour mettre en œuvre les actions suivantes, comprenant :
lors de la détection du fait que le commutateur n'est pas dans l'état ouvert, l'affichage (S306) d'une interface d'écran verrouillé sur l'interface d'affichage du terminal mobile ;
l'obtention (S307) d'une opération de déclenchement sur l'interface d'écran verrouillé ; et
lors de la détection de l'opération de déclenchement, l'affichage (S308) de l'interface de prévisualisation sur l'interface d'affichage du terminal mobile.

3. Terminal mobile selon la revendication 2, l'obtention (S307) de l'opération de déclenchement sur l'interface d'écran verrouillé comprenant :
l'affichage d'un bouton de déclenchement pour ouvrir l'interface de prévisualisation sur l'interface d'écran verrouillé du terminal mobile ; et
l'obtention d'une opération tactile sur le bouton de déclenchement.

4. Terminal mobile selon la revendication 2, l'obtention (S307) de l'opération de déclenchement sur l'interface d'écran verrouillé comprenant :
l'obtention d'une opération de glissement de l'interface d'écran verrouillé vers une interface de déverrouillage.

5. Terminal mobile selon l'une quelconque des revendications 1 à 4, l'obtention (S201) de l'identifiant d'événement de l'événement déclencheur comprenant :
lors de la détection de l'événement déclencheur d'éclairage de l'écran du terminal mobile, l'activation (S301) d'un service de gestion de puissance (PMS) ;
l'obtention (S302), au moyen du PMS, de l'identifiant d'événement de l'événement déclencheur.

6. Procédé de déverrouillage, comprenant :
lors de la détection d'un événement déclencheur d'éclairage d'un écran d'un terminal mobile, l'obtention (S201) d'un identifiant d'événement de l'événement déclencheur ;
lors de la détection du fait que l'identifiant d'événement correspond à un identifiant d'événement pré-mémorisé, l'activation (S202) d'un dispositif de collecte d'informations de visage du terminal mobile et l'éclairage (S202) de l'écran du terminal mobile, l'activation (S202) du dispositif de collecte d'informations de visage et l'éclairage (S202) de l'écran comprenant : l'activation (S202) du dispositif de collecte d'informations de visage et l'éclairage (S202) de l'écran en parallèle ;
la détection du fait qu'un commutateur pour lancer une interface de prévisualisation est dans un état ouvert ;
lors de la détection du fait que le commutateur est dans l'état ouvert, l'affichage de l'interface de prévisualisation sur une interface d'affichage du terminal mobile, l'interface de prévisualisation étant configurée pour afficher l'image de visage collectée par le dispositif de collecte d'informations de visage ; et
lors de la détection du fait que l'image de visage collectée par le dispositif de collecte d'informations de visage correspond à un modèle de visage pré-mémorisé, la réalisation (S203) d'une opération de déverrouillage.

7. Procédé selon la revendication 6, comprenant en outre :
lors de la détection du fait que le commutateur n'est pas dans l'état ouvert, l'affichage (S306) d'une interface d'écran verrouillé sur l'interface d'affichage du terminal mobile ;
l'obtention (S307) d'une opération de déclenchement sur l'interface d'écran verrouillé ; et
lors de la détection de l'opération de déclenchement, l'affichage (S308) de l'interface de prévisualisation sur l'interface d'affichage du terminal mobile.

8. Procédé selon la revendication 7, l'obtention (S307) de l'opération de déclenchement sur l'interface d'écran verrouillé comprenant :
l'affichage d'un bouton de déclenchement pour ouvrir l'interface de prévisualisation sur l'interface d'écran verrouillé du terminal mobile ; et
l'obtention d'une opération tactile sur le bouton de déclenchement.

9. Procédé selon la revendication 7, l'obtention (S307) de l'opération de déclenchement sur l'interface d'écran verrouillé comprenant :
l'obtention d'une opération de glissement de l'interface d'écran verrouillé vers une interface de déverrouillage.

10. Procédé selon l'une quelconque des revendications 6 à 9, l'obtention (S201) de l'identifiant d'événement de l'événement déclencheur comprenant :
lors de la détection de l'événement déclencheur d'éclairage de l'écran du terminal mobile, l'activation (S301) d'un service de gestion de puissance (PMS) ;
l'obtention (S302), au moyen du PMS, de l'identifiant d'événement de l'événement déclencheur.

11. Support de mémorisation lisible par ordinateur comportant des programmes informatiques mémorisés pour l'échange de données électroniques, les programmes informatiques amenant un terminal mobile à réaliser le procédé de déverrouillage selon l'une quelconque des revendications 6 à 10.
